(19) **Europäisches Patentamt / European Patent Office / Office européen des brevets**

(11) **EP 3 708 628 B1**

(12) **EUROPÄISCHE PATENTSCHRIFT**

(45) Veröffentlichungstag und Bekanntmachung des Hinweises auf die Patenterteilung:
**27.12.2023   Patentblatt 2023/52**

(21) Anmeldenummer: **20162571.2**

(22) Anmeldetag: **12.03.2020**

(51) Internationale Patentklassifikation (IPC):
**C09J 7/21** *(2018.01)*       **C09J 7/38** *(2018.01)*

(52) Gemeinsame Patentklassifikation (CPC):
**C09J 7/21; C09J 7/385;** C09J 2433/00

(54) **VERWENDUNG EINES KLEBEBANDS ZUM BEFESTIGEN VON LEITUNGEN INSBESONDERE AUF UNTERGRÜNDEN WIE DIE INNENRAUM DEKORTEILE EINES PKWS, INSBESONDERE DACHHIMMEL, TÜRSEITENTEIL, KOFFERRAUMDECKEL**

USE OF AN ADHESIVE TAPE FOR FIXING LINES, IN PARTICULAR ON SURFACES SUCH AS THE INTERIOR DECORATIVE PARTS OF A PASSENGER VEHICLE, IN PARTICULAR ROOF LINER, DOOR SIDE PART, BOOT LID

UTILISATION D'UNE BANDE ADHÉSIVE POUR FIXER DES CONDUITES, EN PARTICULIER SUR DES SUPPORTS TELS QUE LES PIÈCES DÉCORATIVES D'UN HABITACLE D'UNE VOITURE, EN PARTICULIER UNE GARNITURE INTÉRIEURE DE TOIT, UNE PARTIE LATÉRALE DE PORTE, UN HAYON DE COFFRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2019   DE 102019203489**

(43) Veröffentlichungstag der Anmeldung:
**16.09.2020   Patentblatt 2020/38**

(73) Patentinhaber: **tesa SE**
**22848 Norderstedt (DE)**

(72) Erfinder:
• **Sellin, Jannik**
**21217 Seevetal (DE)**
• **Schmidlin, Andreas**
**21720 Guderhandviertel (DE)**
• **Dag, Hannes**
**Hamburg 22081 (DE)**
• **Barkley, Arne**
**25551 Winseldorf (DE)**

(74) Vertreter: **tesa SE**
**Hugo-Kirchberg-Straße 1**
**22848 Norderstedt (DE)**

(56) Entgegenhaltungen:
**EP-A2- 2 128 212       WO-A1-2017/140459**

**Beschreibung**

Die Erfindung bezieht sich auf die Verwendung eines Klebebands zum Befestigen von Leitungen insbesondere auf Untergründen wie die Innenraum-Dekorteile eines Pkws, insbesondere Dachhimmel, Türseitenteil, Kofferraumdeckel.

In Fahrzeuginnenräumen von PKW dienen Rund- und Flachkabel der Übertragung von elektronischen Impulsen oder der Versorgung von Verbrauchern. Die Flachleitungen sind überwiegend entweder mit Folie zusammenkaschierte Kupferstreifen (FFC) oder Leiterbahnen in Form von dünnen, flexiblen gedruckten Schaltungen (FPC). Aufgrund der zunehmenden Anzahl der elektrischen beziehungsweise elektronischen Bauteile nimmt auch die Zahl der notwendigen Kabel immer zu.

Insbesondere über den Dachhimmel verlaufen zunehmend viele Kabel, die für die Montage des Kraftfahrzeugs im Dachhimmel sicher fixiert werden müssen.

Eine technisch einfache Lösung stellt die Verwendung von ein- oder beidseitig klebend ausgerüsteten Klebebändern dar, die zu Stücke abgelängt über die zu fixierenden Kabel oder Kabelstränge angebracht werden und die so die Kabel auf dem jeweiligen Untergrund, beispielsweise dem Dachhimmel, fixieren.

Dachhimmel weisen in der Regel eine raue Oberfläche auf. Deshalb ist eine hohe initial Anhaftung und Oberflächenbenetzung notwendig, für die eine passende und optimierte Klebmasse ausgewählt werden muss. Der Träger kann die Anhaftung unterstützen, da der Andruck gut durch den Träger auf die Oberfläche weitergegeben werden muss, um eine gute Benetzung zu realisieren. Neben der Anforderung an die Anhaftung, müssen außerdem die Anforderungen der Anwendung erfüllt sein. Dabei treten vor allem statische Lasten auf. Zur Beständigkeit gegen diese Lasten werden relativ hohe Vliesgrammaturen benötigt, um die Lasten gut aufnehmen und verteilen zu können. Außerdem ist es wichtig, dass die Klebmasse eine Repulsionsbeständigkeit besitzt, um hier unterstützen zu können.

Für die Kabelfixierungsanwendung mit einseitigen Klebebändern wird also eine bestimmte Kombination von Trägermaterialien und Klebemassen benötigt.

Vorteilhaft haben sich Vliese als Träger herausgestellt, die eine relativ hohe Grammatur besitzen. Dann sind diese in der Lage, die auftretenden Lasten gut aufzunehmen und zu dissipieren.

Des Weiteren wird eine Klebemasse benötigt, die eine gute initiale und eine gute finale sowie eine dauerhafte Haftung besitzt. Um eine sichere dauerhafte Befestigung von Kabeln im Dachhimmel eines PKW auch unter erschwerten Bedingungen sicherzustellen, das heißt zum Beispiel ein Autoleben lang unter Einfluss von Temperatur und Luftfeuchtigkeit, haben sich scherfeste, harzabgemischte oder auch wasserbasierte Acrylat-Klebemassen bereits bewährt.

Das Produkt muss für eine gute Performance bestimmten kritischen Anwendungstests widerstehen.

Darüber hinaus ist die Verarbeitbarkeit von entscheidender Bedeutung. Dabei ist die Applikation auf dem Substrat wichtig und auch die Spendbarkeit mit einem Dispenser. In der Praxis kommen unter anderem einfache Dispenser zur Anwendung, bei denen das Klebeband manuell über eine Klinge gerissen wird.

Bei Klebebändern mit Vliesträgern mit hohen Flächengewichten ergibt sich keine saubere und gerade Abrisskante, die Abrisskante franst aus, was seitens der Anwender nicht hingenommen wird. In solchen Fällen sind aufwändige, automatische oder semiautomatischen Dispenser notwendig.

Ein Klebeband, das zur Fixierung von Kabeln auf Dachhimmel eingesetzt wird, ist das Klebeband tesa® 50118. Dieses besteht aus einem Nadelvlies aus PET, das mit einer Acrylatklebemasse beschichtet ist.

Dieses Klebeband weist die folgenden Eigenschaften auf:

- Hervorragende Dämpfungseigenschaften
- Verklebungssicher ohne Abschälen vom Untergrund
- Besonders geeignet für anspruchsvolle, raue Oberflächen meist ohne Vorbehandlung
- Geeignet zum Schneiden mit vollautomatischen Klebebanddispensern

Allerdings kann dieses Klebeband nicht manuell abgelängt werden. Es ergibt sich beim Versuch keine saubere und gerade Abrisskante, die Abrisskante franst aus.

Alternativ werden Klebebänder mit sehr dünnen Spinnvliesträgern angeboten, die ein Flächengewicht von beispielsweise 25 g/m$^2$ aufweisen. Diese dämpfen aber nicht ausreichend.

Klebebänder mit einem Spinnvlies als Träger sind grundsätzlich bekannt. Diese werden beispielsweise zur Bandagierung von Kabelbäumen eingesetzt. So beschreibt die DE 195 23 494 A1 ein Selbstklebeband zum Bandagieren von Kabelbäumen mit einem bandförmigen textilen Träger, der aus Spinnvlies besteht. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist. Das Klebeband zeigt bei seiner Verwendung zur Kabelbaumbandagierung aufgrund seiner speziellen Ausführung gute Handreißeigenschaften und gute Abrolleigenschaften.

Mit der DE 298 04 431 U wird ebenfalls die Verwendung eines Klebebandes mit einem Träger aus Vliesmaterial zum Bandagieren von Kabelbäumen offenbart, wobei das vorgeschlagene Spinnvlies aus Polyester besteht. EP2128212A2 oder DE19523494A1 beschreiben typische Träger für Klebebänder in Kraftfahrzeugen. Insbesondere Klebebänder zum Ummanteln von Kabelsätzen.

Der vorliegenden Erfindung liegt die Aufgabe zugrunde, ein Klebeband zur Verfügung zu stellen, das für die Kabelbefestigung auf insbesondere Dachhimmeln geeignet ist und das folgende Anforderungen vereint.

1. Hohe initiale Haftung
2. Hohe Beständigkeit gegen anwendungsnahe Belastungen
3. Verarbeitbarkeit auf manuellen Dispensern, sprich kein Ausfransen beim manuellen Ablängen

Gelöst wird diese Aufgabe durch die Verwendung eines Klebebands, wie es im Hauptanspruch niedergelegt ist. Gegenstand der Unteransprüche sind dabei vorteilhafte Weiterbildungen des Klebebands.

Demgemäß betrifft die Erfindung die Verwendung eines klebend ausgerüsteten Klebebandes mit einer Trägerschicht aus einem Spinnvlies, wobei die Trägerschicht ein Flächengewicht von 30 bis 160 g/m$^2$ aufweist und wobei die Trägerschicht zumindest einseitig mit einer vernetzten Klebemasse, vorzugsweise Haftklebemasse ausgerüstet ist, die vor der Vernetzung die folgende Zusammensetzung umfasst:

- zumindest eine erste Basispolymerkomponente mit für eine kovalente Vernetzung und für eine koordinative Vernetzung geeigneten funktionellen Gruppen,
- sowie zumindest einen kovalenten Vernetzer,
- und zumindest einen koordinativen Vernetzer,
- wobei der koordinative Vernetzer gegenüber dem kovalenten Vernetzer im molaren Überschuss vorliegt, zur Befestigung von Leitungen vorzugsweise im Innenraum von PKW.

Spinnvliese sind textile Flächengebilde, die aus den unmittelbar extrudierten oder düsengesponnenen Chemiefäden bestehen, deren Filamente im gleichen Arbeitsgang verstreckt, geöffnet, verwirrt und mechanisch, thermisch oder chemisch zu einem Vlies verfestigt werden.

Es werden aus einer Polymerschmelze durch eine Spinndüse mittels Heißluftstrom Endlosfilamente erzeugt, die auf einem Transportband abgelegt werden. Durch die Verwirbelung der Endlosfilamente bildet sich bei der Ablage ein Vlies aus. Zur Verfestigung wird das Vlies direkt im Anschluss noch vorzugsweise durch einen beheizten Kalander thermisch verfestigt. Dabei können unterschiedliche Prägegeometrien zum Einsatz kommen, beispielsweise Diamant- oder Reiskornmuster.

Die Verfestigung nach Ablage der Endlosfilamente kann alternativ oder zusätzlich zur thermischen Behandlung auch durch Luft- oder Wasserstrahlen erfolgen. Bei Verfestigung ausschließlich durch Wasserstrahlen kann sehr viel besser ein "textiler Charakter" des Vlieses erzeugt werden als durch eine Kalandrierung, da durch die Wasserstrahlen kein starkes Anschmelzen der Fasern, sondern ein Vermaschen derselbigen, insbesondere auch eine zumindest teilweise senkrechte Ausrichtung der Filamentfasern erreicht werden kann. Das entstandene Textil wird als wasserstrahlverfestigtes Spinnvlies bezeichnet.

Vorzugsweise ist das Spinnvlies ein Spinnvlies aus Polypropylen.

Alternativ ist das Spinnvlies ein Spinnvlies aus Polyester, insbesondere aus Polyester- und Co-Polyesterfasern, die weiter vorzugsweise mit Hilfe eines Kalanders flächig verfestigt und/oder geprägt sein können.

Der Anteil an Polyesterfasern im Träger beträgt in einer weiteren vorteilhaften Ausführungsform der Erfindung mehr als 70 Gew.-%, vorzugsweise mehr als 80 Gew.-%, und an Co-Polyesterfasern von weniger als 30 Gew.-%, vorzugsweise weniger als 20 Gew.-%.

In einer weiteren Ausführung der Erfindung wird der Träger von einem Spinnvlies aus Polyamid oder Polyethylen gebildet, das mit Hilfe eines Kalanders ebenfalls thermisch verfestigt und geprägt werden kann.

Das Vlies weist vorteilhaft folgende Eigenschaftskombination auf:

- Vliesgewicht: 30 bis 160 g/m$^2$, vorzugsweise 40 bis 150 g/m$^2$, weiter vorzugsweise 50 bis 130 g/m$^2$, noch weiter vorzugsweise 70 bis 80 g/m$^2$
- Dicke: 0,13 bis 0,6 mm, vorzugsweise 0,19 bis 0,53 mm, weiter vorzugsweise 0,24 bis 0,48 mm, noch weiter vorzugsweise 0,39 mm
- Reißkraft in Längsrichtung: 70 bis 400 N/50mm, vorzugsweise 98 bis 370 N/50mm, weiter vorzugsweise 135 bis 320N/50mm, noch weiter vorzugsweise 150 N/50mm
- Reißkraft in Querrichtung: 35 bis 270 N/50mm, vorzugsweise 45 bis 220 N/50mm, weiter vorzugsweise 62 bis 200N/50mm, noch weiter vorzugsweise 145 N/50mm

Erfindungsgemäß liegt die Biegesteifigkeit des Spinnvlieses vorzugsweise unter 66 mN cm, weiter vorzugsweise unter 50 mN cm.

Die Biegesteifigkeit wird gemessen nach der im Buch "Vliesstoffe: Rohstoffe, Herstellung, Anwendung, Eigenschaften, Prüfung", Wiley-VCH, Ausgabe 2000, Seite 671.

Die Garnfeinheit, Garnstärke oder der Titer eines Garnes, einer Faser oder eines Filamentes wird in Masse pro Längeneinheit gemessen. Über die Festigkeit des Garnes oder das Volumen sagt die Garnfeinheit nichts aus.

Eine hohe Garnfeinheit bedeutet ein kleineres, ein hoher Titer ein größeres Verhältnis Masse/Länge.

Die Garnfeinheit wird international in Tex (tex) gemessen (1 tex entspricht 1 Gramm pro km).

Die Feinheit der Fasern beträgt in einer weiteren vorteilhaften Ausführungsform der Erfindung 1 bis 4,5 dtex, vorzugsweise 1,5 bis 2,5 dtex, liegen.

Als Kalander zur Prägung des Spinnvlieses kommt bevorzugt ein Zweiwalzenkalander, der aus mindestens einer Glattwalze und/oder einer Gravurwalze besteht, zum Einsatz. Die Gravurwalze weist dabei vorzugsweise eine Prägefläche von 10 bis 50 % auf, vorzugsweise 30 %.

Die Gravurwalze kann ein Kreuzgewölbe aufweisen.

Die Temperatur der Gravurwalze liegt vorzugsweise im Bereich von 150 °C bis 200 °C. Die aus der Kalandrierung resultierende Muldentiefe in der Prägung des erfindungsgemäßen Trägers ist von mehreren Faktoren während des Vorganges der Kalandrierung abhängig. Dabei spielen die Temperatur der Prägewalze, der auf das Spinnvlies im Spalt zwischen den Walzen ausgeübte Druck und die Geschwindigkeit, mit der das Spinnvlies den Walzenspalt passiert, eine entscheidende Rolle.

Als besonders vorteilhaft erweisen sich die folgenden Parameter für eine optimale Gestaltung des Spinnvlieses zur Weiterverarbeitung:

| Temperatur der Prägewalze: | 150 °C |
|---|---|
| Liniendruck: | 75 daN/cm |
| Fahrgeschwindigkeit: | 50 m/min |

Um dem Klebeband für den jeweiligen Einsatzzweck optimierte Eigenschaften zu geben, können den Vliesträgern während des Produktionsvorganges weitere Additive zugesetzt werden. So kann man durch die Verwendung entsprechender Farbpigmente eine bevorzugte Farbe bei den Vliesträgern erzielen. Handelsübliche UV-Stabilisatoren erhöhen die Stabilität des Klebebandes gegenüber intensiver UV-Bestrahlung zum Beispiel durch die Sonne.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Erfindungsgemäß verwendet wird insbesondere die Klebemasse, wie sie ausführlich in der WO 2017/140459 A1 offenbart ist.

Danach kommt insbesondere eine vernetzte Klebemasse, vorzugsweise Haftklebemasse, zur Anwendung umfassend ein Basispolymer sowie zumindest einen kovalenten und zumindest einen koordinativen Vernetzer. Erfindungsgemäß insbesondere vorteilhaft sind die vernetzten Klebemassen Acrylatklebemassen, insbesondere Acrylathaftklebemassen. Zur Vernetzung werden zumindest ein koordinativer Vernetzer und zumindest ein kovalenter Vernetzer gemeinsam eingesetzt.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Zur Erzielung gewünschter Eigenschaften einer Haftklebemasse, beispielsweise um eine hinreichende Kohäsion der Haftklebemassen zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen - indem ein- und dasselbe Vernetzermolekül mit zwei unterschiedlichen Makromolekülen reagiert, also insbesondere mindestens zwei reaktive Zentren besitzt -, oder Vernetzermoleküle können auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Es kann unterschieden werden zwischen verschiedenen Typen von Vernetzern, nämlich

1.) kovalenten Vernetzern, nämlich solchen, die an der zu verknüpfenden Makromolekülen kovalenten angreifen und somit eine kovalente chemische Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren kovalente Bindungen ausbildenden chemischen Reaktionen in Frage.

2.) koordinativen Vernetzern, nämlich solchen, die an der zu verknüpfenden Makromolekülen koordinativ angreifen und somit eine koordinative Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren koordinative Bindungen ausbildenden chemischen Reaktionen in Frage.

Die vernetzte Klebemasse besteht insbesondere aus

(a) zumindest einer ersten Basiskomponente mit

(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,

wobei zumindest eines der Homopolymere oder zumindest eines der Copolymere, insbesondere alle der Polymere der Basispolymerkomponente für die Vernetzung funktionelle Gruppen aufweisen,

(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(a) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,

(b2) gegebenenfalls weitere mit dem Basispolymer im Wesentlichen nicht homogen mischbare und in diesem nicht lösliche Bestandteile, wie bestimmte Harze oder Additive, wobei die Komponente (b2) insbesondere ganz oder teilweise mit der optional vorhandenen weiteren Polymerkomponente (b1) homogen mischbar ist;

(c) Vernetzern, nämlich

(c1) zumindest einen kovalenten Vernetzer,

(c2) zumindest einen koordinativen Vernetzer,

und

(d) gegebenenfalls Lösemittel oder Lösemittelreste.

Als Polymere für die Basispolymerkomponente (a1) kommen insbesondere solche Polymere und Polymermischungen in Frage, die sich durch sowohl durch kovalente als auch durch koordinative Vernetzer vernetzen lassen. Dies sind insbesondere Polymere, die für die Vernetzung freie Säuregruppen aufweisen.

Als bevorzugte Basispolymere lassen sich dabei Acrylat-Copolymere einsetzen, insbesondere solche Polymere (Copolymere, Polymermischungen), die zu mindestens 50 Gew.-% auf Acrylmonomere zurückzuführen sind. Als Comonomere für die Einführung der vernetzungsfähigen Gruppen werden dabei freie Säuregruppen aufweisende copolymerisierbare Monomere gewählt, besonders bevorzugt wird Acrylsäure eingesetzt. säuregruppen enthaltende Monomere, wie beispielsweise Acrylsäure, haben die Eigenschaft, die haftklebrigen Eigenschaften der Haftklebemasse zu beeinflussen. Wird Acrylsäure verwendet, wird diese bevorzugt in einem Anteil von bis zu maximal 12,5 Gew.-%, bezogen auf die Gesamtheit der Monomere der Basispolymerkomponente, verwendet. Dabei wird - in Abhängigkeit der jeweils eingesetzten Vernetzermengen - bevorzugt zumindest so viel Acrylsäure einpolymerisiert, dass genug Säuregruppen zugegen sind, dass es zu einer im Wesentlichen vollständigen Umsetzung der Vernetzer kommen kann.

Eine vorteilhafte Haftklebemasse umfasst als Basiskomponente (a) - für die vorteilhafte Haftklebemasse im Folgenden auch als Polyacrylat-Komponente bezeichnet - 60 bis 100 Gew.-%, bevorzugt 65 Gew.-% bis 80 Gew.-%, an gegebenenfalls abgemischten Acrylatcopolymeren (im Sinne der Komponenten (a1) und (a2)) und optional als zweite Komponente (b) - für die vorteilhafte Haftklebemasse im Folgenden auch als Elastomer-Komponente bezeichnet - 0 bis 40 Gew.-%, bevorzugt 15 Gew.-% bis 30 Gew.-%, mit den Acrylatcopolymeren im Wesentlichen nicht homogen mischbare, gegebenenfalls ihrerseits jedoch wiederum abgemischte Elastomere (im Sinne der weiteren Polymerkomponente (b1) und (b2)), wobei die Elastomere insbesondere in Form eines oder mehrerer Synthesekautschuke gewählt werden. Die Angaben zur Zusammensetzung beziehen sich auf die Summe der Komponenten (a) und (b).

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (zum Beispiel durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylat-Komponente (a) der vorteilhaften Haftklebemasse stellt für sich bevorzugt eine homogene Phase dar. Die Elastomer-Komponente (b) kann in sich homogen vorliegen, oder in sich selbst Mehrphasigkeit aufweisen, wie es von mikrophasenseparierenden Blockcopolymeren bekannt ist. Polyacrylat- und Elastomer-Komponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die Lehre nicht schädlich ist. Die entsprechenden Komponenten werden im Sinne dieser Schrift dann als "im Wesentlichen frei" von der jeweils anderen Komponente angesehen.

Die vorteilhafte Klebemasse liegt dementsprechend zumindest bei Raumtemperatur (23 °C), in zumindest zweiphasiger Morphologie vor. Sehr bevorzugt sind die Polyacrylat-Komponente und die Elastomer-Komponente in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylat-Komponente - und die zweite Phase reich an der anderen Komponente - der Elastomer-Komponente - ist. Ein geeignetes Analysesystem für eine Phasentrennung ist beispielsweise die Raster-Elektronenmikroskopie. Phasenseparation kann sich aber beispielsweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt dann vor, wenn sie sich zumindest durch eine der Analysenmethoden eindeutig zeigen lässt. Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

Die Phasentrennung für die erfindungsgemäß eingesetzten Klebemassen findet insbesondere derart statt, dass die Elastomer-Komponente dispergiert in einer kontinuierlichen Matrix der Polyacrylat-Komponente vorliegt. Die durch die Elastomer-Komponente gebildeten Bereiche (Domänen) liegen bevorzugt im Wesentlichen kugelförmig vor. Die durch die Elastomer-Komponente gebildeten Bereiche (Domänen) können auch von der Kugelform abweichen, insbesondere verzerrt wie zum Beispiel in Beschichtungsrichtung elongiert und orientiert vorliegen. Die Größe der Elastomer-Domänen liegt in ihrer größten Ausdehnung typischerweise - aber nicht zwingend - zwischen 0,5 $\mu$m und 20 $\mu$m, insbesondere zwischen 1 $\mu$m und 10 $\mu$m. Andere Domänenformen sind ebenfalls möglich, so zum Beispiel schichtförmige oder stäbchenförmige, wobei auch diese in ihrer Gestalt von idealen Strukturen abweichen können und zum Beispiel gebogen oder verzerrt sein können.

Die Polyacrylat-Komponente und/oder die Elastomer-Komponente können jeweils als 100-%-Systeme, das heißt ausschließlich auf ihre jeweilige Polymerkomponente ((a1) bzw. (b1)) beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt, wie beispielweise Harze.

In einer vorteilhaften Ausführung der Erfindung sind die Polyacrylat-Komponente und die Elastomer-Komponente ausschließlich aus ihrer jeweiligen Polymerkomponente ((a1) bzw. (b1)) zusammengesetzt, so dass keine weiteren polymeren Komponenten vorhanden sind, insbesondere keine Harze anwesend sind. In einer Weiterentwicklung umfasst die gesamte Klebemasse außer den beiden Polymerkomponenten (a1) und (b1) keine weiteren Bestandteile.

Die vorteilhaften Klebmassen können insbesondere Harz-frei sein, da die Polyacrylat-Komponente häufig bereits selbst typischerweise Haftklebrigkeit aufweist und der haftklebrige Charakter auch dann erhalten bleibt, wenn die Elastomer-Komponente zugegen ist. Trotzdem kann es von Interesse sein, die klebtechnischen Eigenschaften weiter zu verbessern oder auf spezielle Anwendungen hin zu optimieren, daher können den Klebemassen in vorteilhafter Weiterentwicklung der Erfindung Klebharze beigemischt werden.

In einer weiteren vorteilhaften Vorgehensweise sind der vorteilhaften Klebmasse somit Harze zugesetzt. Als Harze oder Klebharze im Sinne dieser Schrift werden oligo- und polymere Verbindungen mit einer zahlenmittleren Molmasse $M_n$ (GPC, Test F) von typischerweise nicht mehr als 5.000 g/mol angesehen. Es können auch Harzgemische zum Einsatz kommen. Insbesondere hat der überwiegende Teil der Harze (bezogen auf den Gewichtsteil an der gesamten Harzmenge), bevorzugt haben alle Harze einen Erweichungspunkt (Ring-Kugel-Verfahren analog DIN EN 1427:2007) von mindestens 80 °C und höchstens 150 °C.

In einer weiteren vorteilhaften Vorgehensweise sind der vorteilhaften Klebemasse ein oder mehrere Klebharze beigemischt, die entweder nur mit dem Polyacrylat-Basispolymer (a1), oder nur mit dem Elastomer-Polymer (b1), oder in beide Polymer-Komponenten ((a1) und (b1)) einmischbar, also mit beiden Polymer-Komponenten verträglich oder teilverträglich, sind. Werden zumindest zwei Harze eingesetzt, so kann ein Teil der Harze (also zumindest eines der Harze) so gewählt werden, dass sie mit dem Polyacrylat-Basispolymer (a1) gut mischbar (verträglich), mit der Elastomer-Polymerkomponente (b1) aber schlecht oder nicht mischbar (im Wesentlichen unverträglich) sind, und ein zweiter Teil der Harze (also zumindest ein zweites Harz) so, dass sie mit der Elastomer-Polymerkomponente (b1) gut mischbar (verträglich), mit dem Polyacrylat-Basispolymer (a1) aber schlecht mischbar oder nicht mischbar (im Wesentlichen unverträglich) sind.

Die Polymer/Harz-Verträglichkeit ist unter anderem von der Molmasse der Polymere und der Harze abhängig. Die Verträglichkeit ist in der Regel besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Beispielsweise aus einem solchen Sachverhalt kann Teilverträglichkeit resultieren.

Eine vorteilhafte Ausführungsform der vorteilhaften Klebemasse ist dadurch gekennzeichnet, dass die die Polyacrylat-Komponente und die Elastomerkomponete umfassende Klebemasse ein oder mehrere mit dem Polyacrylat-Basispolymer (a1) verträgliche, also mit dem Polyacrylat-Basispolymer (a1) gut mischbare Harze, insbesondere Klebharze, enthält (im Folgenden als polyacrylatverträgliche (Kleb-)Harze bezeichnet). Die polyacrylatverträglichen (Kleb-)Harze können so gewählt werden, dass sie mit dem Elastomer-Polymerkomponente (b1) nicht verträglich sind, oder so, dass sie mit ihr teilverträglich sind; bei mehreren polyacrylatverträglichen (Kleb-)Harzen können die Vertreter ausschließlich aus einer dieser beiden Kategorien oder aus beiden Kategorien gewählt sein.

Polyacrylatverträgliche (Kleb-)Harz werden insbesondere bevorzugt in solch einer Menge eingesetzt, dass das Verhältnis des Polyacrylat-Basispolymers (a1) zu polyacrylatverträglichen Harzen im Bereich von 100 : 0 (Grenzbereich 100 : 0 bedeutet die Abwesenheit polyacrylatverträglicher Harze) bis 50 : 50 liegt, mehr bevorzugt im Bereich von 80 : 20 bis 60 : 40.

Eine weitere vorteilhafte Ausführungsform der vorteilhaften Klebemasse ist dadurch gekennzeichnet, dass die die Polyacrylat-Komponente (a) und die Elastomer-Komponente (b) umfassende Klebmasse ein oder mehrere mit der Elastomerpolymerkomponente (b1) verträgliche, also mit der Elastomer-Polymerkomponente (b1) gut mischbare, Harze, insbesondere Klebharze, enthält (im Folgenden als elastomerverträgliche (Kleb-)Harze bezeichnet). Die elastomerverträglichen (Kleb-)Harze können so gewählt werden, dass sie mit dem Polyacrylat-Basispolymer (a1) nicht verträglich sind, oder so, dass sie mit ihm teilverträglich sind. Bei mehreren elastomerverträglichen (Kleb-)Harzen können die Vertreter ausschließlich aus einer dieser beiden Kategorien oder aus beiden Kategorien gewählt sein. Sehr bevorzugt wird so vorgegangen, dass die elastomerverträglichen Klebharze mit dem Polyacrylat-Basispolymer (a1) im Wesentlichen unverträglich sind. Elastomerverträgliche (Kleb-)Harze werden insbesondere bevorzugt in einer Menge eingesetzt, das das Verhältnis von Elastomer-Polymerkomponente (a1) zu elastomerverträglichen (Kleb-)Harzen im Bereich von 100 : 0 (Grenzbereich 100 : 0 bedeutet die Abwesenheit elastomerverträglicher Harze) bis 50 : 50 liegt, bevorzugt 70 : 30.

Sofern für die vorstehenden Ausführungsvarianten nichts Gegenteiliges gesagt ist, können bei den vorstehend genannten Ausführungsformen abgesehen von den genannten Polymerkomponenten jeweils zusätzlich nichtpolymere Additive anwesend sein, es kann aber jeweils auch in Abwesenheit solcher Additive gearbeitet werden.

Die Polyacrylat-Komponente (a) der vorteilhaften Klebemasse umfasst insbesondere eines oder mehrere Polymere auf Polyacrylatbasis, die die Basispolymerkomponente (a1) darstellen.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten. Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln. Vorteilhaft liegt die mittlere Molmasse (Gewichtsmittel Mw) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Polyacrylate im Bereich von 250 000 g/mol bis 10 000 000 g/mol, bevorzugt im Bereich von 500 000 g/mol bis 5 000 000 g/mol.

Besonders bevorzugt wird die Zusammensetzung der Polyacrylat-Komponente derart gewählt, dass die Polyacrylat-Komponente eine Glasübergangstemperatur (DDK, siehe unten) von nicht mehr als 0 °C, bevorzugt von nicht mehr als - 20 °C, sehr bevorzugt von nicht mehr als - 40 °C aufweist.

Die Glastemperatur von Copolymeren kann durch Wahl und mengenmäßige Zusammensetzung der eingesetzten Komponenten vorteilhaft derart gewählt, dass sich in Analogie zur Fox-Gleichung nach Gleichung G1

$$\frac{1}{T_G} = \sum_n \frac{w_n}{T_{G,n}} \qquad (G1)$$

ein geeigneter Glasübergangspunkt $T_G$ für das Polymer ergibt; mit

n = Laufzahl über die eingesetzten Monomere, $w_n$ = Massenanteil des jeweiligen Monomers n (Gew.-%) und $T_{G,n}$ = jeweilige Glasübergangstemperatur des Homopolymers aus den jeweiligen Monomeren n in K. Glasübergangstemperaturen von Homopolymeren können bis zu einer bestimmten oberen Grenzmolmasse von der Molmasse des Homopolymeren abhängen; die Bezugnahme auf Glasübergangstemperaturen von Homopolymeren in dieser Schrift erfolgt in Bezug auf solche Polymere, deren Molmassen oberhalb dieser Grenzmolmasse liegen, also im Glasübergangstemperatur-konstanten Bereich. Bestimmung des $T_G$ erfolgt nach Entfernung des Lösemittels im unvernetzten Zustand (in Abwesenheit von Vernetzern).

Analog kann die Gleichung G1 auch zur Bestimmung und Vorhersage der Glasübergangstemperatur von Polymergemischen angewendet werden. Dann gilt, sofern es sich um homogene Mischungen handelt,

n = Laufzahl über die eingesetzten Polymere, $w_n$ = Massenanteil des jeweiligen Polymeren n (Gew.-%) und $T_{G,n}$ = jeweilige Glasübergangstemperatur des Polymeren n in K.

Durch Abmischung mit Klebharzen erhöht sich in der Regel die statische Glasübergangstemperatur.

Besonders vorteilhaft sind statistische Copolymere einsetzbar. Zumindest eine Polymersorte der Polyacrylat-Komponente basiert vorteilhaft auf unfunktionalisierten $\alpha,\beta$-ungesättigten Estern. Werden diese für das zumindest eine Polymer in der Polyacrylat-Komponente mit Copolymercharakter verwendet, können als Monomere bei der Herstellung dieser zumindest einen Polymersorte prinzipiell alle dem Fachmann geläufigen Verbindungen, die sich zur Synthese von (Meth)acrylat(co)polymeren eignen, eingesetzt werden. Bevorzugt werden $\alpha,\beta$-ungesättigte Alkylester der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Zumindest eine Sorte Monomere für die Polyacrylate der Polyacrylat-Komponente der vorteilhaften Klebemasse sind solche, deren Homopolymer eine Glasübergangstemperatur $T_G$ von nicht mehr als 0 °C, sehr bevorzugt höchstens - 20 °C aufweist. Dies sind insbesondere Ester der Acrylsäure mit linearen Alkoholen mit bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Des Weiteren können zusätzlich Monomere zum Einsatz kommen, deren Homopolymer eine Glasübergangstemperatur $T_G$ von mehr als 0 °C aufweist. Als spezifische Beispiele werden bevorzugt ein oder mehrere Mitglieder gewählt aus der Gruppe umfassend

Methylacrylat, Methylmethacrylat, Ethylacrylat, n-Propylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Weiterhin können Monomere mit der Neigung zur Ausbildung teilkristalliner Bereiche im Polymer gewählt werden. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Hier lassen sich besonders vorteilhaft beispielsweise Stearylacrylat und/oder Stearylmethacrylat einsetzen. Weitere vorteilhaft einsetzbare Monomere sind monofunktionelle Acrylate und/oder Methacrylate von überbrückten Cycloalkylalkoholen mit zumindest 6 C-Atomen im Cycloalkylalkoholrest. Die Cycloalkylalkohole können auch substituiert sein, z.B. durch $C_1$-bis $C_6$-Alkylgruppen, Halogenatome oder Cyanogruppen. Spezifische Beispiele sind Cyclohexylmethacrylate, Isobornylacrylat, Isobornylmethacrylat und 3,5-Dimethyladamantylacrylat.

Zur Variation der Glasübergangstemperatur können zur Herstellung der Polyacrylate auch zu einem Teil solche Comonomere eingesetzt werden, deren Homopolymere eine hohe statische Glasübergangstemperatur besitzen. Als Komponenten eigenen sich aromatische Vinylverbindungen, wie z.B. Styrol, wobei bevorzugt die aromatischen Kerne $C_4$- bis $C_{18}$-Bausteine umfassen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Als Comonomere zu den Acrylmonomeren lassen sich auch weitere mit Acrylmonomeren copolymerisierbare Monomere einsetzen, zum Beispiel in einem Anteil von bis zu 40 Gew.-%. Solche Comonomere können prinzipiell alle mit den Acrylaten verträglichen Verbindungen mit copolymerisierbaren Doppelbindungen sein, wie etwa Vinylverbindungen. Solche Vinylverbindungen können ganz oder teilweise gewählt werden aus der Gruppe umfassend Vinylester, Vinylether, Vinylhalogenide, Vinylidenhalogenide, Vinylverbindungen mit aromatischen Cyclen und Heterocyclen, insbesondere in α-Stellung zur Doppelbindung. Besonders bevorzugt geeignete Comonomere sind beispielsweise Vinylacetat, Vinylformamid, Vinylpyridin, Ethylvinylether, Vinylchlorid, Vinylidenchlorid, Acrylnitril.

Aber auch andere mit Acrylmonomeren copolymerisierbare Verbindungen sind hier einsetzbar.

Zur effektiven Vernetzung ist es insbesondere von Vorteil, wenn zumindest ein Teil der Polyacrylate funktionelle Gruppen aufweisen, mit denen die eingesetzten Vernetzer zur Reaktion kommen können. Bevorzugt werden hierfür Monomere mit Säuregruppen eingesetzt, wie beispielsweise Acrylsäure-, Sulfonsäure- oder Phosphonsäuregruppen, oder mit Säureanhydridbausteinen.

Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid.

In einer vorteilhaften Ausführungsform der Erfindung sind der Polyacrylat-Komponente ein oder mehrere polyacrylatverträgliche Klebharze beigemischt, das im Wesentlichen mit dem Polyacrylat kompatibel ist. Hierbei kann grundsätzlich auf die als hierfür geeignet bekannten Klebharze zurückgegriffen werden. Besonders bevorzugt werden Terpenphenolharze eingesetzt. Es sind aber beispielsweise auch Kolophoniumderivate, insbesondere Kolophoniumester einsetzbar.

Die polyacrylatverträglichen Harze weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von MMAP- und DACP-Werte wird auf C. Donker, PSTC Annual Technical Seminar, Proceedings, S. 149-164, Mai 2001 verwiesen.

Die mit der Polyacrylat-Komponente im Wesentlichen nicht verträgliche Elastomer-Komponente (b) der vorteilhaften Klebemasse umfasst bevorzugt einen oder unabhängig voneinander gewählt mehrere Synthesekautschuke, sowie gegebenenfalls Harze und/oder andere Additive.

Bevorzugt für die Elastomer-Komponente werden Blockcopolymere eingesetzt. Vorteilhaft sind die Synthesekautschuke insbesondere solche in Form thermoplastischer Blockcopolymere, deren Struktur durch eine der nachstehenden Formeln darstellbar ist:

(II)  A-B

(III)  A-B-X(A'-B')$_n$

wobei

- A bzw. A' ein Polymer ist gebildet durch Polymerisation eines Vinylaromaten, wie beispielsweise Styrol oder $\alpha$-Methylstyrol,
- B bzw. B' ein Polymer ist aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen,
- X eine optionale Verknüpfungsgruppe (zum Beispiel ein Rest eines Kopplungsreagenzes oder Initiators) ist,
- n eine ganze Zahl zwischen 1 und 4 ist
- (A'-B')n über A' (Struktur IIIa) oder B' (Struktur IIIb) mit X bzw. mit (A-B) verknüpft sein kann, bevorzugt über B'
- A von der Zusammensetzung und/oder Molmasse = A' sein kann und B von der Zusammensetzung und/oder Molmasse = B' sein kann.

Geeignete Vinylaromatenblockcopolymer umfassen einen oder mehrere gummiartige Blöcke B bzw. B' (Weichblöcke, Elastomerblöcke) und einen oder mehrere glasartige Blöcke A bzw. A'. In einigen Ausführungsformen umfasst das Blockcopolymer mindestens einen glasartigen Block. In einigen weiteren Ausführungsformen umfasst das Blockcopolymer zwischen einem und fünf glasartigen Blöcken.

In einigen vorteilhaften Ausführungsformen wird zusätzlich zu den Strukturen II, IIIa und/oder IIIb oder ausschließlich ein Blockcopolymer verwendet, welches ein Multiarm-Blockcopolymer ist. Dieses wird durch die allgemeine Formel

(IV)  $Q_m$-Y

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multifunktionalen Initiator entstammt. Insbesondere hat jeder Arm Q unabhängig die Formel A*-B*, wobei A* und B* jeweils unabhängig zu den übrigen Armen entsprechend der vorstehenden Defonen für A bzw. A' und B bzw. B' gewählt werden, so dass analog den Strukturen II, IIIa und IIIb jeweils A* einen glasartigen Block und B* einen Weichblock repräsentiert. Selbstverständlich ist es auch möglich, für mehrere Arme Q oder alle Arme Q identische A* und/oder identische B* zu wählen.

Die Blöcke A, A' und A* werden im Folgenden gemeinsam als A-Blöcke bezeichnet. Die Blöcke B, B' und B* werden im Folgenden entsprechend gemeinsam als B-Blöcke bezeichnet.

A-Blöcke sind generell glasartige Blöcke mit jeweils einer Glasübergangstemperatur (DDK, siehe unten), die oberhalb der Raumtemperatur (unter Raumtemperatur sei im Zusammenhang dieser Erfindung 23 °C verstanden) liegt. In einigen vorteilhaften Ausführungsformen liegt der Tg des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke bzw. [Weichblöcke oder Elastomerblöcke] mit einem Tg von kleiner als Raumtemperatur auf. In einigen Ausführungsformen ist der Tg des Weichblocks kleiner als -30 °C oder sogar kleiner als -60 °C.

Neben den für die Formeln II und IIIa/IIIb und IV genannten und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome. Beispielhaft seien für weitere vorteilhafte konjugierte Diene für die gummiartigen B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Der Anteil an A-Blöcke bezogen auf die gesamten Blockcopolymere beträgt dabei im Mittel bevorzugt 10 bis 40 Gew.-%, mehr bevorzugt 15 bis 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien.

Gemische verschiedener Blockcopolymere können zum Einsatz kommen. Bevorzugt werden Triblockcopolymere ABA und/oder Diblockcopolymere AB eingesetzt. Blockcopolymere können linear, radial oder sternförmig (Multiarm) sein, auch unabhängig der Strukturen II und III.

Als elastomerverträgliche Harze lassen sich insbesondere vorteilhaft Kohlenwasserstoffharze einsetzen. Geeignete Klebharze für diese Harzklasse sind u.a. vorzugsweise hydrierte Polymerisate des Dicyclopentadiens, nicht hydrierte, partiell, selektiv oder vollständig hydrierte Kohlenwasserstoffharze auf Basis von C5-, C5/C9- oder C9-Monomerströmen, oder besonders bevorzugt Polyterpenharze auf Basis von $\alpha$-Pinen und/oder $\beta$-Pinen und/oder $\delta$-Limonen. Vorgenannte Klebharze können sowohl allein als auch im Gemisch eingesetzt werden. Idealerweise ist es im Wesentlichen nicht verträglich mit den Acrylatpolymeren. Der aromatische Anteil sollte daher nicht zu hoch gewählt werden. Geeignete Klebharze dieser Harzklasse sind insbesondere mit dem Weichblock oder den Weichblöcken der Elastomer-Komponente kompatibel. Die mit den Synthesekautschuken verträglichen Kohlenwasserstoffharze der Haftklebemasse weisen bevorzugt einen DACP-Wert von mindestens 0 °C, sehr bevorzugt von mindestens 20 °C, und/oder bevorzugt einen MMAP-Wert von mindestens 40 °C °C, sehr bevorzugt von mindestens 60 °C, auf. Zur Bestimmung von MMAP- und DACP-Werten wird auf C. Donker, PSTC Annual Technical Seminar, Proceedings, S. 149-164, Mai 2001, verwiesen.

Auch die optional einsetzbaren Kohlenwasserstoffharze im Sinne dieser Schrift sind oligo- und polymere Verbindungen mit einer zahlenmittleren Molmasse Mn von typischerweise nicht mehr als 5.000 g/mol. Es können auch Kohlenwasserstoffharzgemische zum Einsatz kommen. Insbesondere hat der überwiegende Teil der Kohlenwasserstoffharze (bezogen auf den Gewichtsteil an der gesamten Kohlenwasserstoffharzmenge), bevorzugt haben alle Kohlenwasserstoffharze einen Erweichungspunkt von mindestens 80 °C und höchstens 150 °C (Ring-Kugel-Verfahren analog DIN EN 1427:2007).

Zudem kann die Klebmasseformulierung auch Klebharze enthalten, die bei Raumtemperatur flüssig sind also einen Harzerweichungspunkt unterhalb 80 °C oder sogar unter 25 °C aufweisen.

Es ist auch denkbar, aromatische Kohlenwasserstoffharze einzusetzen, die mit den A-Blöcken kompatibel sind. Insbesondere solche Klebharze 2 können auch mit der Polyacrylat-Komponente (teil)-verträglich sein.

In einer vorteilhaften Variante der Erfindung werden zusätzlich zu polyacrylatverträglichen Klebharz(en) und/oder zusätzlich zu elastomerverträglichen Klebharz(en) oder alternativ zu diesen Klebharzen ein oder mehrere Klebharze eingesetzt, die mit beiden Komponenten verträglich oder die mit der einen Komponente verträglich und mit der anderen Komponente teilverträglich sind.

Beispielsweise können ein oder mehrere polyacrylatverträgliche Klebharze eingesetzt werden, die mit der Elastomer-Komponente zumindest teilverträglich sind oder vollständig mischbar sind. Werden als Elastomer-Komponente thermoplastische Blockcopolymere eingesetzt, wie weiter vorstehend beschrieben, so können die eingesetzten polyacrylatverträglichen Klebharze mit den A-Blöcken und/oder den B-Blöcken der Elastomer-Komponente zumindest teilverträglich, oder vollständig mischbar sein. Beispielsweise können auch ein- oder mehrere Klebharze eingesetzt werden, die mit der Elastomer-Komponente verträglich sind und mit der Polyacrylat-Komponente zumindest teilverträglich. Werden als Elastomer-Komponente thermoplastische Blockcopolymere eingesetzt, wie weiter vorstehend beschrieben, so können die eingesetzten polyacrylatverträglichen Klebharze mit den A-Blöcken und/oder den B-Blöcken der Elastomer-Komponente mischbar sein.

In sehr bevorzugter Vorgehensweise sind die Vernetzer der Komponente (c) in die Basiskomponente homogen einmischbar, gegebenenfalls nach vorheriger Lösung in geeigneten Lösemitteln.

Als kovalente Vernetzer (Komponente (c1)) für die vorliegende Erfindung werden in einer bevorzugten Ausführung der Erfindung Glycidylamine eingesetzt. Als besonders bevorzugte Vertreter seien exemplarisch N,N,N',N'-Tetrakis(2,3-epoxypropyl)cyclohexane-1,3-dimethylamine und N,N,N',N'-tetrakis(2,3-epoxypropyl)-m-xylen-a,a'-diamin genannt. Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propanediol oder (3,4-Epoxycyclohexan)methyl-3,4-epoxycyclohexylcarboxylat seinen hier exemplarisch genannt.

Weiterhin können multifunktionelle Azeridine eingesetzt. Hierzu sei beispielsweise Trimethylolpropane tris(2-methyl-1-aziridinepropionate) genannt.

Als kovalente Vernetzer werden in einer weiteren bevorzugten Ausführung der Erfindung Isocyanate eingesetzt, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat eingesetzt werden. Sie können allein oder in einer Kombination von zwei oder mehr Arten davon verwendet werden.

Es wird zumindest ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer (Komponente (c2)) für die vorliegende Erfindung kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer können grundsätzlich alle bekannten Liganden diesen. Die für die koordinative Bindung der organischen Verbindung genutzten Atome können aber insbesondere solche Atome sein, die feie Elektronenpaare aufweisen, wie beispielsweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat), Titandibutoxidbis(octylenglycholat), Titandipropoxidbis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Kovalente Vernetzer werden bevorzugt in einer Gesamtmenge von 0,015 bis 0,04, bevorzugt 0,02 bis 0,035 Gewichtsteile, bezogen auf 100 Gewichtsteile der Basispolymerkomponente (a1) eingesetzt, sehr bevorzugt in einer Menge von 0,03 Gew.%. Koordinative Vernetzer werden bevorzugt in einer Menge von 0,03 bis 0,15, bevorzugt 0,04 bis 0,1 Gewichtsteile bezogen auf 100 Gewichtsteile der Basispolymerkomponente (a1) eingesetzt.

Weiter vorzugsweise werden kovalente Vernetzer und koordinative Vernetzer derart eingesetzt, dass die koordinativen Vernetzer im molaren Überschuss, bezogen auf die kovalenten Vernetzer, vorliegen. Bevorzugt werden die Vernetzer in den vorstehend genannten Mengen Bereichen eingesetzt, und zwar derart, dass das molare Verhältnis von kovalenten Vernetzern zu koordinativen Vernetzern - also das Verhältnis der eingesetzten Stoffmenge $n_{kov}$ der kovalenten Vernetzer zur eingesetzten Stoffmenge $n_{koord}$ der koordinativen Vernetzer - im Bereich von 1 : 1,3 bis 1 : 4,5 liegt, dementsprechend $1{,}3 \leq n_{koord}/n_{kov} \leq 4{,}5$. Sehr bevorzugt ist ein molares Verhältnis von kovalenten Vernetzern zu koordinativen Vernetzern von 1 : 2 bis 1 : 4.

Die Klebemasse, insbesondere Haftklebemasse, kann sich auf die vorgenannten Bestandteile (Basispolymer und Vernetzer) beschränken, sie kann neben dem Basispolymer und den Vernetzern jedoch auch weitere Bestandteile beinhalten, insbesondere die dem Fachmann grundsätzlich bekannten Beimischungen. Hierdurch können insbesondere gewünschte Eigenschaften der resultierenden Klebemasse, insbesondere Haftklebemasse, gezielt beeinflusst und eingestellt werden. Weitere Komponenten und/oder Additive können der Klebemasse jeweils allein oder in Kombination mit einem, zweien oder mehreren anderen Additiven oder Komponenten.

In einer bevorzugten Vorgehensweise sind der Klebemasse Harze, wie Klebharze und/oder thermoplastische Harze, beigemischt. Die maximal zusetzbare Harzmenge wird dabei durch die Mischbarkeit mit den - gegebenenfalls mit weiteren Ausgangsstoffen abgemischten - Polymeren begrenzt; bevorzugt sollte sich zwischen Harz und Polymeren eine homogene Mischung ausbilden.

Als klebrigmachende Harze sind lassen sich die dem Fachmann grundsätzlich bekannten Klebharze einsetzbar. Genannt seien beispielsweise Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze, jeweils für sich oder in Kombination miteinander. Besonders vorteilhaft lassen sich alle mit der Polymermasse kompatiblen (in ihr löslichen löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Weiterhin können optional

- Weichmacher (Plastifizierungsmittel) - wie z.B. niedermolekulare Polyacrylate, Phthalate, wasserlösliche Weichmacher, Weichharze, Phosphate oder Polyphosphate -,
- funktionelle Additive, wie Initiatoren, Beschleuniger,
- elektrisch leitfähige Materialien, wie z.B. konjugierte Polymere, dotierte konjugierte Polymere, Metallpigmente, Metallpartikel, Metallsalze, metallbeschichtete Partikeln - z.B. silberbeschichtete Kugeln - Graphit, Leitruße, Kohlenstoffasern, ferromagnetische Additive, etc.,

- Schäumungsmittel, Blähmittel, expandierbare Hohlkugeln,
- schwerentflammbare Füllstoffe - wie beispielsweise Ammoniumpolyphosphat -,
- Compoundierungsmittel, Keimbildner
- Alterungsschutzmittel - z.B. in Form von primären und sekundären Antioxidantien -, Lichtschutzmittel, Ozonschutzmittel,
- pulver- und granulatförmige Füllstoffe, Farbstoffe und Pigmente - wie. zum Beispiel Fasern, Ruße, Zinkoxide, Titandioxide, Kreiden (CaCOs), Kieselsäuren, Silikate, Voll- oder Hohlglaskugeln, Voll- oder Hohlpolymerkugeln, keramische Voll- oder Hohlkugeln, Mikrokugeln aus anderen Materialien,
- organische Füllstoffe

allein oder in beliebiger Kombination zweier oder mehrerer Additive zugesetzt sein.

Die Polymere werden insbesondere durch radikalische Polymerisation hergestellt, vorzugsweise in Lösung. Nach der Polymerisation wird bevorzugt derart vorgegangen, dass das Lösungsmittel aus dem Polymerisationsprodukt entfernt wird. Die Vernetzer und/oder die übrigen Zusatzstoffe können vor oder nach der Entfernung des Lösemittels zugesetzt werden, bevorzugt geschieht dies noch in der Lösungsphase.

Der Restlösungsmittelanteil soll auf einen Anteil von nicht mehr als 5 Gew.-%, insbesondere nicht mehr als 2 Gew.-%, ganz besonders nicht mehr als 0,5 Gew.-%, bezogen auf die nach Entfernung des Lösungsmittels verbleibende Mischung, gesenkt werden. Bevorzugt wird ein lösemittelfreies System angestrebt.

Das entfernte Lösungsmittel wird in bevorzugter Vorgehensweise einem Recyclingprozess zugeführt. Das Lösungsmittel, was zur Herstellung der Reaktionslösung eingesetzt wird, kann ganz oder teilweise einem Recyclingprozess entnommen werden. Insbesondere vorteilhaft wird das Lösungsmittel ganz oder teilweise im Kreis geführt, das heißt das entfernte Lösungsmittel nach einer Polymerisation wird ganz oder teilweise zur Herstellung einer Reaktionslösung für eine weitere Polymerisation eingesetzt.

Erfindungsgemäß verwendet wird eine vernetzte Haftklebemasse, erhältlich durch Vernetzung einer vernetzbaren Klebemasse, wie sie vorstehend dargestellt wurde. Die Vernetzung findet dabei bevorzugt an einer zur Schicht beziehungsweise zum Film ausgebildeten Haftklebemasse statt.

Die Vernetzungsreaktion kann dabei insbesondere wie folgt ablaufen:
In einer vorteilhaften Vorgehensweise werden die beiden Substanzen als Reinstoff oder in einem geeigneten Lösemittel vorgelöst zu dem in Lösung vorliegenden Polymer gegeben, dann das Polymer mit den Vernetzern gut durchgemischt, auf einen temporären oder permanenten Träger mit den üblichen Beschichtungsverfahren beschichtet und dann unter geeigneten Bedingungen getrocknet (das Lösemittel entfernt), wobei die Vernetzung stattfindet.

In einer optionalen, insbesondere für sehr reaktive Systeme geeigneten Vorgehensweise wird zunächst einer der Vernetzer in Reinform oder vorgelöst zu der Polymerlösung gegeben. Der zweite Vernetzer wird erst kurz vor der Beschichtung zugeführt, zum Beispiel über eine Inline-Dosierung mit nachgeschaltetem aktiven oder statischem Mischer und anschließender Beschichtung und Trocknung.

Die Topfzeit (Verarbeitungszeit) der koordinativen Vernetzer kann durch Zugabe der zuvor beschriebenen Liganden zu der Polymer-Vernetzer-Lösung erhöht werden. Der Ligandenüberschuss wird dann bei der Trocknung entfernt; erst ab dann sind die koordinativen Vernetzer (voll) reaktiv.

Die Trocknungsbedingungen (Temperatur und Verweilzeit) werden sehr bevorzugt so gewählt, dass nicht nur das Lösungsmittel entfernt wird, sondern auch die Vernetzung auch zu einem Großteil abgeschlossen ist, so dass ein stabiles Vernetzungsniveau - insbesondere bei höheren Temperaturen - erreicht wird. Insbesondere wird die Klebemasse vollständig vernetzt.

Unter vollständiger Vernetzung einer Klebemasse wird erfindungsgemäß verstanden, dass deren maximale Scherstrecke "max" im Mikroscherweg-Test (Methode D; siehe experimeteller Teil dieser Schrift) bei den dort genannten Bedingungen bei wiederholter (beispielweise täglicher) Mikroscherweg-Messung innerhalb einer Periode von 48 Stunden nur im Rahmen der Genauigkeit der Messmethode (etwa bis zu maximal 5 %) ändert, wenn die Klebmasse bei Raumtemperatur (23 °C) bei ansonsten Normbedingungen gelagert wird.

Der Nachweis der vollständigen Vernetzung kann je nach Anwendungsgebiet der Klebemasse auch für andere Temperaturen (zum Beispiel 40 °C, insbesondere solchen Temperaturen, die den jeweiligen Anwendungstemperaturen entsprechen) durchgeführt werden.

Die Erfindung betrifft weiterhin Klebebänder und Klebefolien, umfassend zumindest eine Schicht der oben geschilderten Haftklebemasse, insbesondere einer vernetzten Haftklebemasse. Als Klebebänder kommen dabei einseitig Klebebände in Frage, bei denen die Schicht aus der Haftklebemasse insbesondere auf einer Seite der Trägerschicht vorgesehen ist (mit direktem Kontakt oder indirekt), sowie doppelseitig klebende Klebebänder, bei denen auf den zwei Seiten der Trägerschicht jeweils in direktem Kontakt oder indirekt eine Schicht einer Haftklebemasse vorgesehen ist. Zumindest einer der Klebemassenschichten eines doppelseitigen Klebebandes ist dann die beschriebene Haftklebemasse, es können auch beide Klebemassenschichten des doppelseitigen Klebebandes besagte Klebemassen sein, die ihrerseits wieder identisch oder unterschiedlich, etwa in ihrer Dicke oder konkreten chemischen Zusammensetzung, sein können. Ein- oder doppelseitige Klebebänder können weitere Schichten aufweisen, wie dies aus dem Stand der Technik grundsätzlich bekannt ist.

Der allgemeine Ausdruck "Klebeband" umfasst im Sinne dieser Erfindung alle flächigen Gebilde wie in zwei Dimensionen ausgedehnte Abschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Auf der Rückseite der Trägerschicht kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.

Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der Klebemasseauftrag, bezogen auf die Klebebandfläche, liegt bevorzugt zwischen 40 und 140 $g/m^2$, vorzugsweise zwischen 60 und 130 $g/m^2$, weiter vorzugsweise zwischen 80 und 100 $g/m^2$ liegt.

Besonders vorteilhaft lässt sich das erfindungsmäße Klebeband zum Befestigen von Leitungen insbesondere auf Untergründen wie die Innenraum-Dekorteile eines Pkws, insbesondere Dachhimmel, Türseitenteil, Kofferraumdeckel verwenden. Hierzu wird das Klebeband auf die gewünschte Länge abgelängt und zumeist quer über den zu fixierenden Kabelabschnitt beispielsweise auf dem Dachhimmel geklebt.

**Beispiele**

Das erfindungsgemäße Klebeband wird nachfolgend in bevorzugter Ausführung beschrieben, ohne damit die Erfindung irgendeiner Beschränkung unterwerfen zu wollen. Des Weiteren sind Vergleichsbeispiele aufgeführt, in denen untaugliche Klebebänder dargestellt sind.

Charakterisierung der eingesetzten kommerziell erhältlichen Chemikalien:

Vernetzer:

| | |
|---|---|
| Erisys GA 240 : | N,N,N',N'-Tetrakis(2,3-epoxypropyl)-m-xylen-a,a'-diamin |
| | Firma Emerald Performance Materials |
| S-610: | N,N,N',N'-Tetrakis(2,3-epoxypropyl)cylohexane-1 ,3-dimethylamine |
| | Firma: Synasia Industry&Trade Co |
| Al-Chelat: | Al-(III)-acetylacetonat |
| | Firma Sigma Aldrich |

Harze:

| Dertophene T: | Terpenphenolharz, Erweichungspunkt ca. 95 °C; |
| | Mw ~ 500 - 800 g/mol; Hydroxylwert 20 - 50 mg KOH/g Firma DRT |
| Dertophene T 110: | Terpenphenolharz, Erweichungspunkt ca. 110 °C; |
| | Mw ~ 500 - 800 g/mol; Hydroxylwert 40 - 60 mg KOH/g Firma DRT |

Sofern im Einzelnen nicht anders angegeben, handelt es sich bei allen Prozentangaben im Folgenden um Gewichtsprozent.

Mengenangaben zur Zusammensetzung der Klebemasse aus der Polyacrylatkomponente, der gegebenenfalls vorhandenen Kautschuk-Komponente und/oder den gegebenenfalls vorhandenen Harzen sind bezogen auf 100 Gew-% der insgesamt durch diese Komponenten zusammengesetzten Klebemasse.

Mengenangaben zum Vernetzer sind angegeben in Gewichtsteilen (GT), bezogen jeweils auf 100 Gewichtsteile der reinen Polyacrylat-Komponente.

*Herstellung des Polyacrylats, mit dem der Spinnvliesträger beschichtet wird*

Ein für radikalische Polymerisationen konventioneller 300 L-Reaktor wurde mit 2,0 kg Acrylsäure, 30,0 kg Isobornylacrylat (BA), 68,0 kg 2-Ethylhexylacrylat (EHA) sowie 72,4 kg Benzin/Aceton (70:30) befüllt. Nach 45minütiger Durchleitung von Stickstoffgas unter Rühren wurde der Reaktor auf 58 °C hochgeheizt und 50 g Vazo® 67 (2,2'-Azobis(2-methylbutyronitril) hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox® 16 (Bis(tert-butylcyclohexyl) peroxydicarbonat) hinzugegeben. Die Reaktion wurde nach 24 h Reaktionszeit abgebrochen und auf Raumtemperatur abgekühlt. Molmassen mittels GPC (Messmethode A): $M_n$ = 62.800 g/mol; $M_w$ = 852.600 g/mol. K-Wert: 62,5.

Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 80 g/m$^2$ wurden auf den jeweiligen Spinnvliesträger der Beispiele kaschiert, so dass ein einseitiges Klebebandmuster resultierte.

Der Acrylatanteil lag bei 100 % (Rein-Polyacrylat-System) und es wurde mit Erisys GA 240 (0,02 GT bezogen auf 100 GT Polyacrylat) vernetzt.

*Charakterisierung des Spinnvliesträgers, der mit der oben beschriebenen Haftklebemasse beschichtet wird*
Polypropylenspinnvlies mit 70 g/m$^2$; Diamantprägung (Beispiel 1)
Polypropylenspinnvlies mit 40 g/m$^2$; Diamantprägung (Beispiel 2)
Polyesterspinnvlies mit 135 g/m$^2$; Diamantprägung (Beispiel 3)

**Durchführung der Tests**

Die Messungen werden - soweit nicht ausdrücklich anders erwähnt - bei einem Prüfklima von 23 ± 1 °C und 50 ± 5 % rel. Luftfeuchte durchgeführt.

**Eigenschaften des Spinnvliesträgers**

Die Messung der Eigenschaften des Spinnvliesträgers erfolgt dabei nach DIN-EN 29073-3.

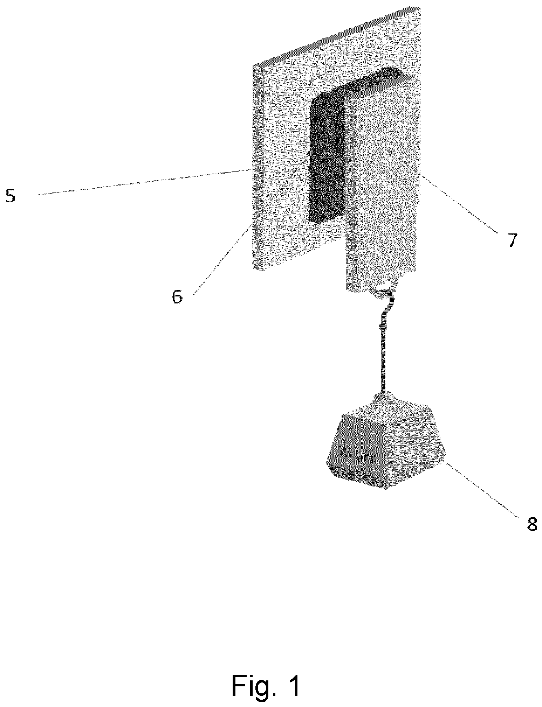

**Statischer Schertest (siehe Figur 1)**

Für die Prüfung werden 20mm breite und 20 cm lange Streifen des Klebebands in Laufrichtung zurechtgeschnitten.

An einem Ende des geschnittenen Streifens wird eine Pappkarte vom 30 mm Breite und 50 mm Länge aufgeklebt, dass das Klebeband zu 25 mm auf der Pappkarte befestigt ist. Die Pappkarte hat eine Grammatur von 200 g/m$^2$. Die Pappkarte ist auf der anderen Hälfte mittig gelocht. Für die Prüfung wird der Streifen mit leichtem Fingerdruck auf das Prüfsubstrat, hier Dachhimmel, angedrückt. Danach wird der Streifen mit einem Anroller definiert auf das Substrat angerollt. Hierfür können verschiedene Anrollgewichte verwendet werden. In diesem Beispiel wird ein 4 kg Anroller verwendet und das Klebeband insgesamt 4-mal überrollt, 2-mal hin und zurück. Der Versuch wird als dreifache Bestimmung durchgeführt.

Nach dem Anrollen wird eine definierte Zeit zum Aufziehen des Produktes festgelegt. Bei einer initialen Messung wird die Untersuchung sofort gestartet. Alternativ kann, wie hier durchgeführt, eine Aufziehzeit von 15 Minuten genutzt werden. Nach der Aufziehzeit wird der Prüfkörper vertikal an einer Aufhängung befestigt, so dass das Ende des Klebestreifens mit der Pappkarte nach oben zeigt. Dann wird die Pappkarte um 180° nach unten geführt und ein Prüfgewicht angehängt. Dieses Prüfgewicht beträgt in der Regel 20 g und soll einen leichten Stecker simulieren, der in der realen Anwendung die Verklebung während des Transports belastet. Als Startpunkt der Messung wird die Stelle markiert, an der die Verklebung direkt nach dem Anhängen des Prüfgewichts Kontakt zum Dachhimmelsubstrat hat. Zu verschiedenen Messzeitpunkten wird nun der Kontaktpunkt markiert. In diesem Fall wird die Messung nach 72 Stunden beendet und ausgewertet. Dabei wird als Wert die Strecke angegeben, die das Klebeband vom Prüfgewicht über die Prüfzeit abgeschält wurde.

Empfohlen wird eine abgeschälte Strecke von <10 mm, bestenfalls <5mm nach 72 h.

## Schneidversuche

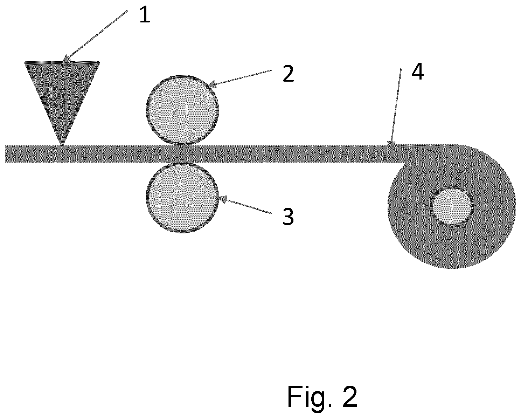

Für die Schneidversuche wird ein Aufbau verwendet, der in Figur 2 vereinfacht dargestellt wird.

Für den Versuch wird das Klebeband per Hand nach oben über das Schneidmesser gezogen. Anschließend werden drei Faktoren beurteilt.

## Schneiderfolg

Lässt sich ein Abschnitt vom Rollenmaterial leicht per Hand abtrennen?

## Schneidkante des Abschnitts & Dimensionsstabilität des Abschnitts

Ist die Schneidkante gerade und zeigt keine oder nur wenige Fasern, die aus der Schneidkante herausragen?

Hat der Abschnitt die Breite, die auch die Rolle aufweist, oder ist der Abschnitte maximal 2 mm schmaler an der Schneidkante als die Rolle?

Ist der Abschnitt mittig in Laufrichtung schmaler geworden, also eingeschnürt?

Es wird jeweils eine fünffache Bestimmung durchgeführt.

Ergebnisse der Prüfung:

## Static peel test auf Standarddachhimmel PET Vlies

Gegenbeispiel 1: tesa 50118 PV2 (PET-Nadelvlies mit 80 g/m$^2$ acrlyatbasierte Klebemasse)

Gegenbeispiel 2: Lohmann Duplocoll 2100FL (PET-Spinnvlies mit 60 g/m$^2$ acrlyatbasierte Klebemasse)

Gegenbeispiel 3: Coroplast 875X (PET-Spinnvlies mit einer acrlyatbasierten Klebemasse)

Gegenbeispiel 4 Polypropylenspinnvlies mit 150 g/m$^2$; Diamantprägung

Gegenbeispiel 5: Polypropylenspinnvlies mit 25 g/m$^2$; Diamantprägung

| | Gegen-bsp. 1 | Gegen-bsp. 2 | Gegen-bsp. 3 | Beispiel 1 | Beispiel 2 | Beispiel 3 | Gegen-bsp. 4 | Gegen-bsp. 5 |
|---|---|---|---|---|---|---|---|---|
| Abschälung nach [mm] | | | | | | | | |
| 1 Stunden | 1 | 25 | 5 | 1 | 3 | 1 | 1 | 4 |
| 72 Stunden | 1 | >150 | 48 | 2 | 5 | 2 | 2 | 7 |

Der Test gilt als bestanden, wenn die abgeschälte Strecke <10 mm, bestenfalls <5 mm ist. Andernfalls schält das Klebeband in der Anwendung zu stark ab, was zu teuren Nacharbeiten führ, das heißt Gegenbeispiele 2, 3 und 4 versagen bei der Abschälung. Aufgrund dessen zeigt sich, dass Gegenbeispiel 1 und Beispiel 1 vom Design her für die

Anwendung optimiert sind. Des Weiteren zeigt sich, dass die Beispiele 2 bis 3 die Anforderungen erfüllen.

**Schneidversuche**

Schneiderfolg

|  | Gegen-bsp. 1 | Gegen-bsp. 2 | Gegen-bsp. 3 | Beispiel 1 | Beispiel 2 | Beispiel 3 | Gegen-bsp. 4 | Gegen-bsp. 5 |
|---|---|---|---|---|---|---|---|---|
| 1 | niO | iO | iO | iO | iO | iO | iO | iO |
| 2 | niO | iO | iO | iO | iO | iO | iO | iO |
| 3 | niO | iO | iO | iO | iO | iO | iO | iO |
| 4 | niO | iO | iO | iO | iO | iO | iO | iO |
| 5 | ni0 | iO | iO | iO | iO | iO | iO | iO |
| Mittelwert | niO | io | io | io | io | iO | iO | iO |
|  | Produkt nur sehr schwer reißbar |  |  |  |  |  |  |  |
| iO: in Ordnung niO: nicht in Ordnung | | | | | | | | |

Schneidkante

|  | Gegen-bsp. 1 | Gegen-bsp. 2 | Gegen-bsp. 3 | Beispiel 1 | Beispiel 2 | Beispiel 3 | Gegen-bsp. 4 | Gegen-bsp. 5 |
|---|---|---|---|---|---|---|---|---|
| 1 | niO | iO | iO | iO | iO | iO | niO | iO |
| 2 | niO | iO | iO | iO | iO | iO | niO | iO |
| 3 | niO | iO | iO | iO | iO | iO | niO | iO |
| 4 | niO | iO | iO | iO | iO | iO | niO | iO |
| 5 | ni0 | iO | iO | iO | iO | iO | niO | iO |
| Mittelwert | niO | io | io | io | io | iO | niO | iO |
|  | Ausgefranste Schneidkante |  |  |  |  |  | Ausgefranste Schneidkante |  |
| iO: in Ordnung niO: nicht in Ordnung | | | | | | | | |

Dimensionsstabilität

|  | Gegen-bsp. 1 | Gegen-bsp. 2 | Gegen-bsp. 3 | Beispiel 1 | Beispiel 2 | Beispiel 3 | Gegen-bsp. 4 | Gegen-bsp. 5 |
|---|---|---|---|---|---|---|---|---|
| 1 | niO | iO | iO | iO | iO | iO | iO | iO |
| 2 | niO | iO | iO | iO | iO | iO | iO | iO |
| 3 | niO | iO | iO | iO | iO | iO | iO | iO |
| 4 | niO | iO | iO | iO | iO | iO | iO | iO |

(fortgesetzt)

| | Gegen-bsp. 1 | Gegen-bsp. 2 | Gegen-bsp. 3 | Beispiel 1 | Beispiel 2 | Beispiel 3 | Gegen-bsp. 4 | Gegen-bsp. 5 |
|---|---|---|---|---|---|---|---|---|
| 5 | ni0 | iO | iO | iO | iO | iO | iO | iO |
| Mittelwert | niO | io | io | io | io | iO | iO | iO |
| | Material deutlich eingeschnürt | | | | | | | |
| iO: in Ordnung niO: nicht in Ordnung | | | | | | | | |

Überraschenderweise hat sich herausgestellt, dass die erfindungsgemäßen Spinnvliese die Schneidbarkeit in dem Maße positiv beeinflussen, so dass selbst Vliesgrammaturen von 50 bis 150 g/m$^2$ manuell schneidbar sind mit einem Abreißdispenser. Sie bieten dabei noch eine Stabilität der Abschnitte an und eine saubere und klare Abreißkante.

Außerdem erfüllt die Kombination aus dem erfindungsgemäßen Träger und der erfindungsgemäßen Klebmasse auch die Anforderung der Anwendung.

**Bezugszeichenliste**

1    Schneidmesser
2    Rolle
3    Rolle
4    Klebebandrolle

5    Substrat
6    Klebeband
7    Pappkarte
8    Gewicht

**Patentansprüche**

**1.** Verwendung eines klebend ausgerüsteten Klebebandes mit einer Trägerschicht aus einem Spinnvlies, wobei die Trägerschicht ein Flächengewicht von 40 bis 140 g/m$^2$ aufweist und wobei die Trägerschicht zumindest einseitig mit einer vernetzten Klebemasse, vorzugsweise Haftklebemasse ausgerüstet ist, die vor der Vernetzung die folgende Zusammensetzung umfasst:

zumindest eine erste Basispolymerkomponente mit für eine kovalente Vernetzung und für eine koordinative Vernetzung geeigneten funktionellen Gruppen,
sowie zumindest einen kovalenten Vernetzer,
und zumindest einen koordinativen Vernetzer,
wobei der koordinative Vernetzer gegenüber dem kovalenten Vernetzer im molaren Überschuss vorliegt,
zur Befestigung von Leitungen vorzugsweise im Innenraum von PKW.

**2.** Verwendung nach Anspruch 1,
**dadurch gekennzeichnet, dass**
das Spinnvlies ein Spinnvlies aus Polyester ist, insbesondere aus Polyester- und Co-Polyesterfasern, die weiter vorzugsweise mit Hilfe eines Kalanders flächig verfestigt und/oder geprägt sind.

**3.** Verwendung nach Anspruch 1 oder 2,
**dadurch gekennzeichnet, dass**
das Spinnvlies die folgende Eigenschaft aufweist:

• Biegesteifigkeit: unter 66 mN cm, vorzugsweise unter 50 mN cm (gemessen nach der im Buch "Vliesstoffe:

Rohstoffe, Herstellung, Anwendung, Eigenschaften, Prüfung", Wiley-VCH, Ausgabe 2000, Seite 671, angegebenen Messmethode).

**4.** Verwendung nach zumindest einem der Ansprüche 1 bis 3,
**dadurch gekennzeichnet, dass**
die vernetzte Klebmasse eine acrylatbasierende Haftklebemasse ist.

**5.** Verwendung nach zumindest einem der vorherigen Ansprüche,
**dadurch gekennzeichnet, dass**

die kovalenten Vernetzer in einer Gesamtmenge von 0,015 bis 0,04 Gewichtsteilen, bevorzugt 0,02 bis 0,035 Gewichtsteilen, bezogen auf 100 Gewichtsteilen der Basispolymerkomponente, vorliegen und/oder
die koordinativen Vernetzer in einer Gesamtmenge von 0,03 bis 0,15 Gewichtsteilen, bevorzugt 0,04 bis 0,1 Gewichtsteilen, bezogen auf 100 Gewichtsteilen der Basispolymerkomponente, vorliegen.

**6.** Verwendung nach zumindest einem der vorherigen Ansprüche,
**dadurch gekennzeichnet, dass**
das molare Verhältnis von kovalenten Vernetzern zu koordinativen Vernetzern im Bereich von 1 : 1,3 bis 1 : 1,45, bevorzugt im Bereich von 1 : 2 bis 1 : 4 liegt.

**7.** Verwendung nach zumindest einem der vorherigen Ansprüche,
**dadurch gekennzeichnet, dass**
als kovalente Vernetzer multifunktionelle Glycidylamine, multifunktionelle Epoxide, multifunktionelle Azeridine und oder multifunktionelle Isocyanate eingesetzt werden.

**8.** Verwendung nach zumindest einem der vorherigen Ansprüche,
**dadurch gekennzeichnet, dass**
als koordinative Vernetzer mehrwertige Metallchelatverbindungen eingesetzt werden.

**9.** Verwendung nach zumindest einem der vorherigen Ansprüche,
**dadurch gekennzeichnet, dass**
die vernetzte Klebemasse aus den folgenden Komponenten besteht:

(a) zumindest der ersten Basiskomponente mit

(a1) als erster Polymerkomponente eine Basispolymerkomponente aus einem Homopolymer, einem Copolymer oder einer homogenen Mischung aus mehreren Homopolymeren, mehreren Copolymeren oder einem oder mehreren Homopolymeren mit einem oder mehreren Copolymeren, wobei zumindest eines der Homopolymere oder zumindest eines der Copolymere, insbesondere alle der Polymere der Basispolymerkomponente für die Vernetzung funktionelle Gruppen aufweisen,
(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,
(b2) gegebenenfalls weitere mit dem Basispolymer im Wesentlichen nicht homogen mischbare und in diesem nicht lösliche Bestandteile, wie bestimmte Harze oder Additive, wobei die Komponente (b2) insbesondere ganz oder teilweise mit der optional vorhandenen weiteren Polymerkomponente (b1) homogen mischbar ist;

(c) Vernetzern, nämlich

(c1) zumindest dem einen kovalenten Vernetzer,
(c2) zumindest dem einen koordinativen Vernetzer,

und

(d) gegebenenfalls Lösemittel oder Lösemittelreste.

**Claims**

1. Use of an adhesively furnished adhesive tape having a carrier layer composed of a spunbonded web, the carrier layer having a basis weight of 40 to 140 g/m$^2$ and being furnished on at least one side with a crosslinked adhesive, preferably pressure-sensitive adhesive, the composition of which prior to crosslinking is as follows:

   at least one first base polymer component having functional groups suitable for covalent crosslinking and for coordinative crosslinking,
   and also at least one covalent crosslinker,
   and at least one coordinative crosslinker,
   the coordinative crosslinker being present in a molar excess over the covalent crosslinker,
   for securing cables preferably in the interior of passenger cars.

2. Use according to Claim 1,
   **characterized in that**
   the spunbonded web is a spunbonded web composed of polyester, more particularly of polyester fibres and copolyester fibres, which more preferably have been superficially consolidated and/or embossed by means of a calender.

3. Use according to Claim 1 or 2,
   **characterized in that**
   the spunbonded web has the following property:

   • flexural strength: less than 66 mN cm, preferably less than 50 mN cm (measured according to the measurement method stated in the book "Vliesstoffe: Rohstoffe, Herstellung, Anwendung, Eigenschaften, Prüfung" [Nonwovens: Raw materials, production, use, properties, testing], Wiley-VCH, 2000 Edition, page 671).

4. Use according to at least one of Claims 1 to 3, **characterized in that**
   the crosslinked adhesive is an acrylate-based pressure-sensitive adhesive.

5. Use according to at least one of the preceding claims,
   **characterized in that**

   the covalent crosslinkers are present in a total amount of 0.015 to 0.04 part by weight, preferably 0.02 to 0.035 part by weight, based on 100 parts by weight of the base polymer component, and/or
   the coordinative crosslinkers are present in a total amount of 0.03 to 0.15 part by weight, preferably 0.04 to 0.1 part by weight, based on 100 parts by weight of the base polymer component.

6. Use according to at least one of the preceding claims,
   **characterized in that**
   the molar ratio of covalent crosslinkers to coordinative crosslinkers is in the range from 1:1.3 to 1:1.45, preferably in the range from 1:2 to 1:4.

7. Use according to at least one of the preceding claims,
   **characterized in that**
   covalent crosslinkers used are polyfunctional glycidylamines, polyfunctional epoxides, polyfunctional azeridines and/or polyfunctional isocyanates.

8. Use according to at least one of the preceding claims,
   **characterized in that**
   coordinative crosslinkers used are polyvalent metal chelate compounds.

9. Use according to at least one of the preceding claims,
   **characterized in that**
   the crosslinked adhesive consists of the following components:

(a) at least the first base component having

(a1) as first polymer component, a base polymer component composed of a homopolymer, a copolymer or a homogeneous mixture of two or more homopolymers, two or more copolymers or one or more homopolymers with one or more copolymers,
with at least one of the homopolymers or at least one of the copolymers, more particularly all of the polymers, of the base polymer component having functional groups for crosslinking,
(a2) optionally further constituents, homogeneously miscible with or soluble in the base polymer component, such as resins or additives, monomer residues, short-chain polymerization products (by-products), impurities, etc.;

(b) optionally a second component having

(b1) as further polymer component, polymers substantially not homogeneously miscible with the base polymer, more particularly polymers without crosslinkable groups,
(b2) optionally further constituents substantially not homogeneously miscible with and not soluble in the base polymer, such as certain resins or additives, with component (b2) in particular being wholly or partly homogeneously miscible with the optionally present further polymer component (b1);

(c) crosslinkers, specifically

(c1) at least the one covalent crosslinker,
(c2) at least the one coordinative crosslinker,

and
(d) optionally solvents or solvent residues.

## Revendications

1. Utilisation d'un ruban adhésif doté d'une couche de support composée d'un filé-lié, la couche de support présentant un poids surfacique de 40 à 140 g/m$^2$ et la couche de support étant pourvue, au moins sur un côté, d'une masse adhésive réticulée, de préférence d'une masse autoadhésive, qui comprend la composition suivante avant la réticulation :

au moins un premier composant de polymère de base doté de groupes fonctionnels appropriés pour une réticulation covalente et pour une réticulation coordinante,
ainsi qu'au moins un agent de réticulation covalente,
et au moins un agent de réticulation coordinante,
l'agent de réticulation coordinante étant présent en excès molaire par rapport à l'agent de réticulation covalente,
pour la fixation de conduites de préférence dans l'espace intérieur d'une voiture particulière.

2. Utilisation selon la revendication 1, **caractérisé en ce que** le filé-lié est un filé-lié de polyester, en particulier de fibres de polyester et de copolyester, qui sont en outre de préférence renforcées et/ou gaufrées en nappe à l'aide d'une calandre.

3. Utilisation selon la revendication 1 ou 2, **caractérisée en ce que** le filé-lié présente la propriété suivante :

• rigidité à la flexion : en dessous de 66 mN cm, de préférence en dessous de 50 mN cm (mesurée selon la méthode indiquée dans le livre « Vliesstoffe : Rohstoffe, Herstellung, Anwendung, Eigenschaften, Prüfung », Wiley-VCH, édition 2000, page 671).

4. Utilisation selon au moins l'une des revendications 1 à 3, **caractérisée en ce que** la masse adhésive réticulée est une masse autoadhésive à base d'acrylate.

5. Utilisation selon au moins l'une des revendications précédentes, **caractérisée en ce que** les agents de réticulation covalente sont présents en une quantité totale de 0,015 à 0,04 partie en poids, préférablement de 0,02 à 0,035 partie en poids, par rapport à 100 parties en poids du composant de type polymère de base, et/ou les agents de

réticulation coordinate sont présents en une quantité totale de 0,03 à 0,15 partie en poids, préférablement de 0,04 à 0,1 partie en poids, par rapport à 100 parties en poids du composant de type polymère de base.

6. Utilisation selon au moins l'une des revendications précédentes, **caractérisée en ce que** le rapport molaire d'agents de réticulation covalente sur agents de réticulation coordinate se situe dans la plage de 1 : 1,3 à 1 : 1,45, préférablement dans la plage de 1 : 2 à 1 : 4.

7. Utilisation selon au moins l'une des revendications précédentes, **caractérisée en ce qu'**en tant qu'agents de réticulation covalente, des glycidylamines polyfonctionnelles, des époxydes polyfonctionnels, des aziridines polyfonctionnelles et/ou des isocyanates polyfonctionnels sont utilisé(e)s.

8. Utilisation selon au moins l'une des revendications précédentes, **caractérisée en ce qu'**en tant qu'agents de réticulation coordinate, des composés chélatants métalliques polyvalents sont utilisés.

9. Utilisation selon au moins l'une des revendications précédentes, **caractérisée en ce que** la masse adhésive réticulée est constituée des composants suivants :

   (a) au moins le premier composant de base comportant

   (a1) en tant que premier composant de type polymère un composant de type polymère de base composé d'un homopolymère, d'un copolymère ou d'un mélange homogène de plusieurs homopolymères, de plusieurs copolymères ou d'un ou plusieurs homopolymères avec un ou plusieurs copolymères, au moins l'un des homopolymères ou au moins l'un des copolymères, en particulier tous les polymères du composant de type polymère de base présentant des groupes fonctionnels pour la réticulation,
   (a2) éventuellement d'autres ingrédients miscibles de manière homogène avec le composant de type polymère de base ou solubles dans celui-ci, comme des résines ou des additifs, des radicaux monomériques, des produits de polymérisation à chaîne courte (sous-produits), des impuretés etc. ;

   (b) éventuellement un deuxième composant comportant

   (b1) en tant que composant de polymère supplémentaire des polymères essentiellement non miscibles de manière homogène avec le polymère de base, en particulier ceux sans groupes réticulables,
   (b2) éventuellement d'autres ingrédients essentiellement non miscibles de manière homogène avec le polymère de base et non solubles dans celui-ci, comme des cires ou des additifs particuliers/particulières, le composant (b2) étant en particulier totalement ou partiellement miscible de manière homogène avec le composant de type polymère (b1) supplémentaire éventuellement présent ;

   (c) des agents de réticulation, à savoir

   (c1) au moins ledit agent de réticulation covalente,
   (c2) au moins ledit agent de réticulation coordinate,

   et
   (d) éventuellement des solvants ou des résidus de solvant.

5

6

7

8

Fig. 1

Fig. 2

**IN DER BESCHREIBUNG AUFGEFÜHRTE DOKUMENTE**

**In der Beschreibung aufgeführte Patentdokumente**

- DE 19523494 A1
- DE 29804431 U
- EP 2128212 A2
- EP 1448744 A1
- WO 2017140459 A1

**In der Beschreibung aufgeführte Nicht-Patentliteratur**

- **BUCH.** Vliesstoffe: Rohstoffe, Herstellung, Anwendung, Eigenschaften, Prüfung. Wiley-VCH, 2000, 671
- **C. DONKER.** *PSTC Annual Technical Seminar, Proceedings, S.,* Mai 2001, vol. 149, 164